(19) Europäisches Patentamt
European Patent Office
Office européen des brevets

(11) Numéro de publication: **0 195 728**
**B1**

# (12) FASCICULE DE BREVET EUROPEEN

(45) Date de publication du fascicule du brevet: **05.10.88**

(51) Int. Cl.4: **C 07 F 7/16**, B 01 J 23/84, B 01 J 23/82

(21) Numéro de dépôt: **86420052.2**

(22) Date de dépôt: **20.02.86**

(54) **Procédé et catalyseur avec le baryum et/ou le strontium comme additif pour la synthèse directe du diméthyldichlorosilane.**

(30) Priorité: **22.02.85 FR 8502549**

(43) Date de publication de la demande:
**24.09.86 Bulletin 86/39**

(45) Mention de la délivrance du brevet:
**05.10.88 Bulletin 88/40**

(84) Etats contractants désignés:
**DE FR GB**

(56) Documents cités:
**EP - A - 0 138 678**
**EP - A - 0 138 679**
**EP - A - 0 141 658**
**FR - A - 1 545 407**
**GB - A - 708 823**
**SU - A - 178 817**

**R.J.H. VOORHOEVE: "Organohalosilanes - precursors to silicones", 1967, pages 130-137, Elsevier Publishing Co., Amsterdam, NL**
**CHEMICAL ABSTRACTS, vol. 89, no. 22, 27 novembre 1978, page 17, no. 180609z, Columbus, Ohio, US**

(73) Titulaire: **RHONE-POULENC CHIMIE, 25, quai Paul Doumer, F-92408 Courbevoie Cédex (FR)**

(72) Inventeur: **Prud'Homme, Christian, 19, rue Commandant Faurax, F-69006 Lyon (FR)**

(74) Mandataire: **Seugnet, Jean Louis et al, RHONE-POULENC INTERSERVICES Service Brevets Chimie Centre de Recherches de Saint-Fons B.P. 62, F-69192 Saint-Fons Cédex (FR)**

**EP 0 195 728 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

**Description**

La présente invention concerne un procédé et un catalyseur pour la synthèse directe du diméthyldichlorosilane.

Le procédé industriel de fabrication d'organochlorosilanes et en particulier de diméthyldichlorosilane dénommé par la suite DMCS est un procédé bien connu qui est décrit notamment dans le brevet des Etats-Unis d'Amérique n° 2 380 995, ainsi que dans l'ouvrage de Walter Noll, Chemistry and Technology of Silicones, 1968; édition Academic Press Inc. p. 26–41.

Selon ce procédé dit de «synthèse directe» ou «synthèse de Rochow», on fabrique directement les organochlorosilanes et, en particulier, le DMCS par réaction du chlorure de méthyle sur le silicium solide en présence de cuivre comme catalyseur suivant la réaction:

$$2\ CH_3\ Cl + Si \rightarrow (CH_3)_2\ Si\ Cl_2$$

En réalité il se forme au cours de la synthèse directe d'autres produits notamment $CH_3\ Si\ Cl_3$ dénommé par la sutie MTCS et $(CH_3)_3\ Si\ Cl$ dénommé par la suite TMCS.

Il se forme également d'autres sous produits comme par exemple $CH_3\ H\ Si\ Cl_2$ et, $(CH_3)_2\ H\ Si\ Cl$ et des produits lourds qui sont des polysilanes, essentiellement des disilanes.

Parmi tous les produits obtenus par synthèse directe, le DMCS est le produit le plus recherché. Ce produit, après hydrolyse et polymérisation, permet d'obtenir des huiles et des gommes qui sont des produits de base pour la fabrication des silicones. Ainsi le DMCS sert à la préparation de résines de polyorganosiloxane, comme le décrivent les brevets des Etats-Unis d'Amérique n° 2 258 218 à 2 258 222, à la préparation d'huiles décrites dans les brevets des Etats-Unis d'Amérique n° 2 469 888 et 2 469 830 et à la préparation d'élastomères de polyorganosiloxane, décrits dans le brevet des Etats-Unis d'Amérique n° 2 448 756.

Il est connu d'utiliser le cuivre ou les composés chimiques de cuivre comme catalyseur de la réaction de synthèse directe utilisé sous la forme d'un alliage ou d'un mélange mécanique avec le silicium éventuellement disposé sur un support minéral.

De façon à améliorer le rendement en DMCS, on a déjà proposé de rajouter divers additifs au cuivre. Ces additifs peuvent être le zinc ou un halogénure de zinc (brevet US 2 464 033), l'aluminium (brevets US 2 403 370 et 2 427 605), l'étain, le manganèse, le nickel et l'argent (brevet britannique 1 201 466), le cobalt (brevet britannique 907 161), le chlorure de potassium (brevet soviétique n° 307 650).

On a déjà mentionné dans le brevet français 950 448 la possibilité d'utiliser l'étain et l'antimoine comme additif au cuivre pour controler la réaction. On a également décrit dans le brevet français 1 037 138 l'addition de calcium, magnésium, béryllium, strontium et baryum comme agent désoxydant des masses de contact utilisées dans la synthèse directe.

Les procédés mettant en œuvre ces additifs permettant certes de perfectionner le procédé de synthèse directe mais ils présentent néanmoins au moins l'un des inconvénients suivants:

– la sélectivité en DMCS évalué par le rapport pondéral moyen $\frac{MTCS}{DMCS}$ et/ou par le % molaire de DMCS par rapport à la totalité des silanes obtenus demeure insuffisant;

– le temps d'amorçage et la température d'amorçage de la réaction sont trop élevés;

– l'activité moyenne du système catalytique dénommée également productivité évaluée en poids des méthylchlorosilanes (MCS) obtenus par heure et part kg de silicium introduit et le taux de transformation maximum du silicium demeurent insuffisants;

– le système catalytique est sensible aux impuretés;

– la formation de sous-produits et en particulier de disilanes demeure élevée.

La présente invention a précisement pour but de proposer un procédé et un catalyseur pour la mise en œuvre du procédé de synthèse directe qui ne présentent pas les inconvénients ci-dessus, ou qui permettent du moins d'en atténuer sensiblement les effets.

Un but de la présente invention est de proposer un procédé et un catalyseur permettant d'obtenir:

– une sélectivité moyenne en DMCS élevée tout en augmentant la productivité, c'est-à-dire la quantité de MCS produite par unité de temps et par unité de masse de contact;

– une sélectivité initiale élevée en début de réaction qui peut être maintenue jusqu'à la dégradation finale du système catalytique;

– un taux de transformation maximum de silicium élevé;

– une teneur pondérale faible en produits «lourds» par rapport aux MCS obtenus;

– une moins grande sensibilité du système catalytique vis-à-vis des impuretés qui sont un poison du catalyseur (en particulier le plomb);

– une température de réaction pas trop élevée.

Dans ce qui suit, sauf mention contraire, les pourcentages indiqués sont en poids.

Ces buts et d'autres qui apparaîtront à la lecture de la description détaillée ci-dessous sont atteints par la présente invention qui concerne en effet un procédé de fabrication de diméthyldichlorosilane par réaction de chlorure de méthyle sur une masse de contact solide formée de silicium et d'un catalyseur comportant du cuivre ou du chlorure cuivreux ou du chlorure cuivrique, et de l'étain ou un composé de l'étain, et du zinc ou un composé du zinc, ledit procédé étant caractérisé en ce que le catalyseur comporte de 30 à 250 ppm (calculés en étain métal) d'étain ou d'un composé d'étain, environ entre 0,01 et 3% (calculés en zinc métal) de zinc ou d'un composé de zinc par rapport à la masse de contact solide, et en outre, entre environ 0,01 et 2% (calculés en poids de métal) d'un additif métallique choisi parmi le baryum et le strontium ou d'un composé de ces deux métaux, par rapport à la masse de contact solide.

Le catalyseur peut être utilisé à une teneur pondérale de 1 à 30%, de préférence de 5 à 12% par rapport au poids total de la masse de contact.

Le catalyseur peut être incorporé au silicium sous forme d'un alliage ou bien sous forme d'un mélange mécanique.

A côté du cuivre métallique, on peut utiliser un chlorure de cuivre, comme décrit dans le brevet US 2 464 033.

Comme halogénure de cuivre on peut utiliser du chlorure cuivrique ou le chlorure cuivreux. On a en effet mis en évidence, conformément à la présente invention, que l'on obtient de meilleurs résultats notamment en sélectivité et en taux de transformation de silicium si on introduisait le cuivre sous forme de chlorure cuivreux, ou cuivrique.

La catalyseur contient de zinc métallique ou un composé de zinc, de préférence du chlorure de zinc, ou de l'oxyde de zinc.

Le zinc est présent à une teneur pondérale comprise entre 0,01 et 3%, de préférence entre 0,02 et 1% (calculée en zinc métal) en poids par rapport au poids de la masse de contact.

Comme additif métallique du baryum et du strontium selon l'invention, on peut utiliser, par exemple, outre les métaux purs, les composés de ces métaux comme par exemple les halogénures, de préférence les chlorures et également les carbonates et les nitrates.

Les composés convenant plus particulièrement sont: $BaCl_2$, $SrCl_2$, $BaCO_3$ et $SrCO_3$, $Ba(NO_3)_2$, $Sr(NO_3)_2$. Ces métaux ou composés de métaux alcalino-terreux seront dénommés par la suite additifs selon l'invention.

Il est souhaitable que la dimension particulaire du silicium soit telle que le diamètre d'au moins 50% en poids des particules soit compris entre 10 et 500 µm.

De même le catalyseur se trouve également sous forme de particules dont le diamètre moyen et avantageusement compris entre 1 et 100 µm. Dans ces conditions de granulométrie de la masse de contact on peut mettre en œuvre la réaction de synthèse directe avec une masse de contact sous forme d'un lit fluidisé.

Le procédé de synthèse directe selon l'invention peut être mis en œuvre de façon générale dans un des trois types d'appareillages suivants: un réacteur du type à lit agité comme celui décrit dans le brevet des Etats-Unis d'Amérique n° 2 449 821, un réacteur du type à lit fluidisé comme celui décrit dans le brevet des Etats-Unis d'Amérique n° 2 389 931 ou dans un four rotatif.

Le catalyseur peut être également utilisé déposé sur une matière minérale en particules comme le sable, la silice broyée, le gel de silice, l'alumine, la brique réfractaire broyée, les catalyseurs pour le graquage du pétrole, les zéolithes et des argiles calcinées comme décrit dans le brevet français 1 545 407.

La réaction a normalement lieu à une température comprise entre 280 et 450 °C, en particulier entre 290 et 370 °C.

On peut réaliser la réaction directement à la température choisie sans amorçage de la réaction à température plus élevée en particulier quand la température de réaction choisie est de l'ordre de 330 °C ou plus en lit fluidisé.

La teneur pondérale en additifs selon l'invention calculée en poids de métal est comprise entre environ 0,01 et 2% en poids par rapport au poids de la masse de contact, de préférence entre 0,1 et 1,0% en poids. Au-dessous de 0,01% l'action de l'additif n'est pas vraiment décalable et au-dessus de 2% en poids, l'additif peut avoir en effet poison qui abaisse notamment la sélectivité.

La teneur pondérale en étain (calculée en étain métal) est comprise entre 30 et 250 ppm par rapport à la masse de contact.

Il est nécessaire d'avoir au moins 30 ppm d'étain. On a en effet mis en évidence, conformément à l'invention, que les effets bénéfiques de l'additif selon l'invention ne sont obtenus qu'en présence d'étain. En outre une teneur pondérale supérieure à 250 ppm aurait un effet néfaste sur la réaction et notamment sur la sélectivité. L'étain peut être ajouté sous forme de bronze ou sous forme d'un composé d'étain, par exemple de chlorure d'étain.

En utilisant un catalyseur selon l'invention on peut obtenir, lorsque la réaction est mise en œuvre en lit agité à une température de 330–350 °C, des sélectivités très élevées.

On peut ainsi obtenir un rapport pondéral moyen MTCS/DMCS de l'ordre ou inférieur à 0,06 pouvant atteindre 0,04 et un % molaire moyen en DMCS par rapport à la totalité des silanes obtenus de l'ordre ou supérieur à 85% pouvant atteindre 95%, un taux de transformation maximum en silicium de l'ordre ou supérieur à 60%, une activité moyenne de l'ordre ou supérieure à 125 g de MCS/h/kg de Si et pouvant atteindre 180 g de MCS/h/kg de Si et plus.

Une sélectivité de l'ordre ou supérieure à 90% apparaît comme particulièrement surprenante par rapport aux sélectivités que l'on obtient en utilisant des masses catalytiques du même type mais ne comportant pas d'additif selon l'invention, comme cela apparaît à la lecture des exemples du brevet français 1 545 407.

Par ailleurs, si on utilise une masse de contact conforme à l'invention mais ne comportant pas d'étain, on obtient comme la montre l'exemple comparatif ci-après une masse de contact très peu active et donc inutilisable industriellement.

Le pourcentage de lourds obtenus par rapport aux MCS obtenus peut être de l'ordre de 1% et il est généralement inférieur à 3% environ.

Ces résultats peuvent être encore améliorés si on augmente la température de réaction. On obtient des résultats similaires si on effectue la réaction en lit fluidisé.

D'autres avantages et caractéristiques de la présente invention apparaîtront à la lecture des

exemples suivants donnés à titre illustratif nullement limitatif.

Dans les exemples suivants, sauf mention contraire, on utilise un réacteur pilote cylindrique de diamètre intérieur 60 mm et de hauteur: 250 mm, muni à sa base d'un distributeur de gaz en verre fritté. Le silicium et le catalyseur sont chargés sous forme d'une poudre dont la taille moyenne d'au moins 50% des particules est comprise entre 60 et 200 µm.

La réaction s'effectue en lit agité et le réacteur est muni d'un élément chauffant extérieur.

Exemple 1
Systeme catalytique: Cu/$BaCl_2$, $2H_2O$, Zn/$Cl_2$/Sn à 330 °C:

Dans un réacteur vertical, cylindrique (diamètre: 60 mm), en verre, muni d'un agitateur métallique et d'un distributeur de gaz en verre fritté, on charge une poudre composée de 210 g de silicium, 23,0 g de poudre de cuivre, 3,22 g de chlorure de zinc, 2,8 g de chlorure de baryum $BaCl_2$, $2H_2O$ et 2,0 g de bronze contenant 2% d'étain.

On chauffe progressivement le réacteur jusqu'à 200 °C sous courant d'azote. Puis, en continuant d'augmenter la température du réacteur, on ferme le robinet d'azote et on commence à introduire le chlorure de méthyle avec un débit de 16 l/h (mesuré à 20 °C).

La température du réacteur est ensuite régulée à 345 °C et maintenue à cette valeur pendant 1 h avant d'être abaissée à 330 °C. Après 4 h de fonctionnement à 330 °C, le débit de chlorure de méthyle est porté à 24 l/h.

Le chauffage et l'agitation sont maintenus jusqu'à l'arrêt complet et spontané de la réaction.

Cet essai a produit des dichlorosilanes pendant 21 h avec une productivité moyenne égale à 141 g par heure et par kilo de silicium chargé dans le réacteur.

Le mélange produit est caractérisé par un rapport pondéral moyen MTCS/DMCS égal à 0,096, la proportion de «lourds» s'élevant à 4,1% en poids.

Par chromatographie en phase vapeur, on trouve les sélectivités molaires moyennes suivantes:

$Me_2SiCl_2$ : 85,1%
$MeSiCl_3$ : 7,08%
$Me_3SiCl$ : 3,47%.

Taux de conversion maximum de silicium: 64,6%.

Exemple 2
Système catalytique: CuCl/$BaCl_2$, $2H_2O$/$ZnCl_2$/Sn à 330 °C

Dans un réacteur vertical, cylindrique (diamètre: 60 mm), en verre, muni d'un agitateur métallique et d'un distributeur de gaz en verre fritté, on charge une poudre composée de:

– 210 g de silicium, 16,3 g de chlorure cuivreux, 1,0 g de chlorure de baryum $BaCl_2$, 2 $H_2O$ 1,6 g de chlorure de zinc et 2,0 g de bronze contenant 2% d'étain.

On chauffe progressivement le mélange jusqu'à 200 °C sous courant d'azote. Puis en continuant d'augmenter la température du réacteur, on arrête l'azote et on commence à introduire le chlorure de méthyle avec un débit de 16 l/h.

La température du réacteur est ensuite régulée à 345 °C et maintenue à cette valeur pendant environ une heure avant d'être abaissée à 330 °C.

Après 4 h de fonctionnement à 330 °C, le débit de chlorure de méthyle est porté à 26 l/h.

Le chauffage et l'agitation sont maintenus jusqu'à l'arrêt complet et spontané de la réaction.

Cet essai a produit des chlorosilanes pendant 15,5 h avec une productivité moyenne égale à 155 g par h et par kg de silicium chargé dans le réacteur.

Le mélange produit est caractérisé par un rapport pondéral moyen $\frac{MTCS}{DMCS}$ égal à 0,061, la proportion de «lourds s'élevant à 3,6% en poids.

Par chromatographie en phase vapeur, on trouve les sélectivités molaires moyennes suivantes:

$Me_2SiCl_2$ : 89,7%
$MeSiCl_3$ : 4,61%
$Me_3SiCl$ : 3,39%

Taux de conversion maximum de silicium: 52%.

Exemple 3
Système catalytique: CuCl/$Sr(NO_3)_2$/$ZnCl_2$/Sn à 330 °C

Dans un réacteur vertical, cylindrique (diamètre: 60 mm), en verre, muni d'un agitateur métallique et d'un distributeur de gaz en verre fritté, on charge une poudre composée de: 210 g de silicium, 16,4 de chlorure cuivreux, 2,37 g de nitrate de strontium, 1,53 g de chlorure de zinc et 2,0 g de bronze contenant 2% d'étain.

On chauffe progressivement le réacteur jusqu'à 200 °C sous courant d'azote. Puis, en continuant d'augmenter la température du réacteur, on arrête l'azote et on commence à introduire le chlorure de méthyle avec un débit de 16 l/h.

La température du réacteur est ensuite régulée à 345 °C et maintenue à cette valeur pendant environ une heure avant d'être abaissée à 330 °C.

Après 3,4 h de fonctionnement à 330 °C, le débit de chlorure de méthyle est porté à 27 l/h.

Le chauffage à 330 °C et l'agitation sont maintenus jusqu'à l'arrêt complet et spontané de la réaction.

Cet essai a produit des chlorosilanes pendant 17 h avec une productivité égale à 146 g par kg de silicium chargé dans le réacteur.

Le mélange produit est caractérisé par un rapport pondéral moyen $\frac{MTCS}{DMCS}$ égal à 0,067, la proportion de «lourds» s'élevant à 4,3% en poids.

Par chromatographie en phase vapeur, on trouve les sélectivités molaires moyennes suivantes:

$Me_2 SiCl_2$ : 87,9%
$MeSiCl_3$ : 5,11%
$Me_3 SiCl$ : 2,73%

Taux de conversion maximum du silicium: 53,6%.

Exemple 4

Système catalytique $CuCl/BaCO_3/ZnCl_2/Sn$ à 330 °C

Dans un réacteur vertical, cylindrique (diamètre: 60 mm), en verre, muni d'un agitateur métallique et d'un distributeur de gaz en verre fritté, on charge une poudre composée de: 210 g de silicium, 2,2 g de carbonate de baryum, 3,21 g de chlorure de zinc, 2,0 g de bronze contenant 2% d'étain et 16,3 g de chlorure cuivreux.

On chauffe progressivement le réacteur jusqu'à 200 °C sous courant d'azote. Puis, en continuant d'augmenter la température du réacteur, on arrête l'azote et on commence à introduire le chlorure de méthyle avec un débit de 16 l/h.

La température du réacteur est ensuite régulée à 345 °C et maintenue à cette valeur pendant environ une heure avant d'être abaissée à 330 °C. Après 4 h de fonctionnement à 330 °C, le débit de chlorure de méthyle est porté à 26 l/h.

Le chauffage à 330 °C et l'agitation sont maintenus jusqu'à l'arrêt complet et spontané de la réaction.

Cet essai a produit des chlorosilanes pendant 17,5 h avec une productivité moyenne égale à 162 g par heure et par kg de silicium chargé dans le réacteur.

Le mélange produit est caractérisé par un rapport pondéral moyen $\frac{MTCS}{DMCS}$ égal à 0,068, la proportion de «lourds« s'élevant à 3,4% en poids.

Par chromatographie en phase vapeur, on trouve les sélectivités molaires moyennes suivantes:

$Me_2SiCl_2$ : 88,3%
$MeSiCl_3$ : 5,17%
$Me_3SiCl$ : 3,42%

Taux de conversion maximum du silicium: 61%.

Exemple 5

Système catalytique $Cu/BaCO_3/CsCl/ZnCl_2/Sn$ à 330 °C

Dans un réacteur vertical, cylindrique (diamètre: 60 mm), en verre, muni d'un agitateur métallique et d'un distributeur de gaz en verre fritté, on charge une poudre composée de: 210 g de silicium, 0,945 g de chlorure de césium, 1,105 g de carbonate de baryum, 23 g de poudre de cuivre, 1,59 g de chlorure de zinc et 2,11 g de bronze contenant 2% d'étain.

On chauffe progressivement le réacteur jusqu'à 200 °C sous courant d'azote. Puis, en continuant d'augmenter la température du réacteur, on ferme le robinet d'azote et on commence à introduire le chlorure de méthyle avec un débit de 16 l/h (mesuré à 20 °C environ). La température du réacteur est alors régulée à 345 °C et maintenue à cette valeur pendant environ 1 h avant d'être abaissée à 330 °C. Après 4 h de fonctionnement à 330 °C, le débit de chlorure de méthyle est porté à 26 l/h.

Le chauffage à 330 °C et l'agitation du réacteur sont maintenus jusqu'à l'arrêt complet et spontané de la réaction.

Cet essai a produit des chlorosilanes pendant 22 h avec une productivité moyenne égale à 148 g par heure et par kg de silicium chargé dans le réacteur.

Le mélange produit est caractérisé par un rapport pondéral moyen $\frac{MTCS}{DMCS}$ égal à 0,047, la proportion de «lourds» s'élevant à 4,1% (en poids).

Par chromatographie en phase vapeur, on trouve les sélectivités molaires moyennes suivantes:

$Me_2SiCl_2$ : 91,01%
$MeSiCl_3$ : 3,69%
$Me_3SiCl$ : 2,28%.

Taux de conversion du silicium: 70,4%.

Exemple comparatif 6

Système catalytique $CuCl/BaCO_3/ZnCl_2$ sans étain

Dans un réacteur vertical, cylindrique (diamètre: 60 mm), en verre, muni d'un agitateur métallique et d'un distributeur de gaz en verre fritté, on charge une poudre composée de: 210 g de silicium, 2,25 g de carbonate de baryum, 1,53 g de chlorure de zinc et 16,3 g de chlorure cuivreux. On chauffe progressivement le réacteur jusqu'à 200 °C sous courant d'azote. Puis en continuant d'augmenter la température du réacteur, on arrête l'azote et on commence à introduire le chlorure de méthyle avec un débit de 16 l/h.

La température du réacteur est ensuite régulée à 345 °C et maintenue à cette valeur pendant environ une heure avant d'être abaissée à 330 °C.

Le chauffage à 330 °C et l'agitation sont maintenus jusqu'à l'arrêt complet et spontané de la réaction.

Cet essai n'a produit des chlorosilanes que pendant 7,8 h, avec une productivité moyenne faible: 58,2 g par heure et par kg de silicium chargé dans le réacteur.

Le taux de conversion maximum du silicium n'a été que de 9,4%. Le mélange produit est caractérisé par un rapport pondéral moyen $\frac{MTCS}{DMCS}$ égal à 0,189, la proportion de «lourds» s'élevant à 1,7% en poids.

Par chromatographie en phase vapeur, on trouve les sélectivités molaires moyennes suivantes:

$Me_2SiCl_2$ : 72,1%
$MeSiCl_3$ : 11,78%
$Me_3SiCl$ : 6,70%
$MeHSiCl_2$ : 4,87%
$SiCl_4$ : 3,46%
$Me_2HSiCl$ : 3,5%

De cet exemple comparatif, il résulte clairement que la présence d'étain est nécessaire pour obtenir une productivité et une sélectivité convenables.

**Revendications**

1. Procédé de fabrication de diméthyldichlorosilane par réaction de chlorure de méthyle sur une masse de contact solide formée de silicium et d'un catalyseur comportant du cuivre ou du chlorure cuivreux ou du chlorure cuivrique, et de l'étain ou un composé de l'étain, et du zinc ou un composé

du zinc, ledit procédé étant caractérisé en ce que le catalyseur comporte de 30 à 250 ppm (calculés en étain métal) d'étain ou d'un composé d'étain, environ entre 0,01 et 3% (calculés en zinc métal) de zinc ou d'un composé de zinc par rapport à la masse de contact solide, et en outre, entre environ 0,01 et 2% (calculés en poids de métal) d'un additif métallique choisi parmi le baryum et le strontium ou d'un composé de ces deux métaux tous les domaines de concentrations mentionnés ci-dessus étant par rapport à la masse de contact solide.

2. Procédé selon la revendication 1, caractérisé en ce que la teneur en additif métallique est comprise entre 0,05 et 1,0%.

3. Procédé selon l'une quelconque des revendications précédentes, caractérisé en ce que la teneur pondérale en zinc est comprise entre 0,02 et 1%.

4. A titre de moyen pour mettre en œuvre un procédé de synthèse directe par réaction de chlorure de méthyle sur du silicium, un catalyseur tel que défini dans l'une quelconque des revendications 1 à 3.

**Patentansprüche**

1. Verfahren zur Herstellung von Dimethyldichlorsilan durch Reaktion von Methylchlorid auf eine feste Kontaktmasse, gebildet aus Silicium und einem Katalysator, enthaltend Kupfer oder Kupfer-I-chlorid oder Kupfer-II-chlorid und Zinn oder eine Verbindung des Zinns und Zink oder eine Verbindung des Zinks, dadurch gekennzeichnet, dass der Katalysator 30 bis 250 ppm (berechnet auf metallisches Zinn) Zinn oder einer Zinnverbindung, zwischen etwa 0,01 und 3% (berechnet als metallisches Zink) Zink oder einer Zinkverbindung in bezug auf die feste Kontaktmasse enthält und im übrigen zwischen etwa 0,01 und 2% (berechnet als Metallgewicht) eines metallischen Zusatzes, ausgewählt unter Barium und Strontium oder einer Verbindung dieser beiden Metalle, wobei alle oben erwähnten Konzentrationsbereiche in bezug auf die feste Kontaktmasse sind.

2. Verfahren gemäss Anspruch 1, dadurch gekennzeichnet, dass der Gehalt an metallischem Zusatz zwischen 0,05 und 1,0% liegt.

3. Verfahren gemäss einem der vorhergehenden Ansprüche, dadurch gekennzeichnet, dass der Gewichtsgehalt an Zink zwischen 0,02 und 1% liegt.

4. Mittel zur Ausführung eines direkten Syntheseverfahrens durch Reaktion von Methylchlorid auf Silicium: Katalysator, wie er in einem der Ansprüche 1 bis 3 definiert ist.

**Claims**

1. Process for manufacturing dimethyldichlorosilane by reaction of methyl chloride with a solid contact mass composed of silicon and a catalyst containing copper or cuprous chloride or cupric chloride, and tin or a tin compound, and zinc or a zinc compound, the said process being characterized in that the catalyst contains from 30 to 250 ppm (calculated as tin metal) of tin or a tin compound, between 0.01 and 3% approximately (calculated as zinc metal) of zinc or a zinc compound relative to the solid contact mass and, in addition, between approximately 0.01 and 2% (calculated as weight of metal) of a metallic additive chosen from barium and strontium, or of a compound of these two metals, all the concentration ranges mentioned above being relative to the solid contact mass.

2. Process according to claim 1, characterized in that the content of metallic additive is between 0.05 and 1,0%.

3. Process according to any one of the preceding claims, characterized in that the zinc content is between 0.02 and 1% by weight.

4. By way of a means for carrying out a direct synthesis process by reaction of methyl chloride with silicon, a catalyst as defined in any one of claims 1 to 3.